Europäisches Patentamt

European Patent Office  (11) Publication number: **0 228 450 B1**

Office européen des brevets

(12)  EUROPEAN PATENT SPECIFICATION

(45) Date of publication of patent specification: **10.10.90**

(21) Application number: **86904553.4**

(22) Date of filing: **23.06.86**

(86) International application number:
**PCT/US86/01339**

(87) International publication number:
**WO 87/00188 15.01.87 Gazette 87/01**

(51) Int. Cl.⁵: **C 08 L 63/00, C 08 L 51/04, C 08 F 279/02**

(54) **RUBBER-MODIFIED EPOXY COMPOUNDS.**

(30) Priority: **26.06.85 US 749078**

(43) Date of publication of application:
**15.07.87 Bulletin 87/29**

(45) Publication of the grant of the patent:
**10.10.90 Bulletin 90/41**

(84) Designated Contracting States:
**DE FR GB NL**

(56) References cited:
**EP-A-0 045 357**
**US-A-3 856 883**

**Chemical Abstracts, volume 85, no. 4, 4 July 1976, ( Columbus Ohio, US ), Kaplunov et al.: "Electroinsulating material", see page 50, abstract no. 22498a, & Kim, K.S. USSR 505030 (·28 Feb. 1976 )**

**The file contains technical information submitted after the application was filed and not included in this specification**

(73) Proprietor: **THE DOW CHEMICAL COMPANY 2030 Dow Center Abbott Road P.O. Box 1967 Midland Michigan 48640-1967 (US)**

(72) Inventor: **HENTON, David, E.**
**5409 Woodview Pass**
**Midland, MI 48640 (US)**
Inventor: **PICKELMAN, Dale, M.**
**319 Price**
**Auburn, MI 48611 (US)**
Inventor: **ARENDS, Charles, B.**
**2204 Westbury Drive**
**Midland, MI 48640 (US)**
Inventor: **MEYER, Victor, W.**
**2212 Parkwood Drive**
**Midland, MI 48640 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

This invention relates to epoxy resin compositions and in particular, to epoxy resins which contain polymeric materials contained therein.

Epoxy compounds, and in particular epoxy resins, comprise a well-known class of thermosettable resins. Such epoxy compounds possess excellent physical and chemical properties, and are particularly useful in a wide variety of applications. For example, epoxy resins are useful as coatings for a variety of substrates, laminates, moldings, adhesives, and in numerous other applications where a material exhibiting good heat resistance, hardness, electrical properties, dimensional stability, corrosion resistance and chemical resistance is desirable.

Unfortunately, typical epoxy thermoset compounds lack toughness and can exhibit brittleness. Attempts have been made to strengthen or reinforce epoxy resins by incorporating therein a variety of elastomeric materials. Examples of toughened epoxy resins are disclosed in US—A—3,923,922; 4,221,697; 4,117,038; 3,496,250; 4,082,895; 3,496,250; 3,316,195; 3,499,949 and 3,509,086; as well as EP—A—78,527, published November 5, 1983; JP—A—55-018401.

US—A—3,856,883 describes the chemical incorporation of a particulate material having unique rubber-like properties and being capable of reacting along the constituents of a thermoset reaction system as a continuous phase, wherein said particulate material is dispersed. The thermosetting material may be an epoxy resin.

Unfortunately, toughened epoxy compounds typically exhibit poor heat resistance. In addition, toughened epoxy compounds can exhibit varying physical properties because commonly used elastomeric materials can vary in size and/or behavior. Furthermore, the elastomeric materials which are incorporated into the epoxy compounds can act as plasticizers which in turn provide undesirable stability problems to the toughened compound.

In view of the deficiencies of the prior art, it would be highly desirable to provide a rubber-modified epoxy compound which is capable of good toughness without significantly sacrificing heat resistant properties.

The object is attained by an epoxy resin composition suitable for preparing toughened cured epoxy resins comprising:

(1) an epoxy resin continuous phase and

(2) a discontinuous phase of rubber particles dispersed in said continuous phase wherein the rubber particles having a substrate of an elastomeric component and grafted thereon an amount of from 0.05 to 0.5 parts by weight per 1 part by weight of the elastomeric component of a phase comprising a functionality which is capable of reacting along with a functionality of the continuous phase and a functionality which is capable of reacting along with functionalities of a curing agent characterized in that the continuous epoxy resin phase is the diglycidyl ether of bisphenol A and the grafted phase is a polymer prepared from a monomer mixture containing styrene/acrylonitrile/glycidyl methacrylate or styrene/acrylonitrile/acrylic acid or ethyl acrylate/methacrylic acid.

The solution of the object includes a process for preparing a toughened epoxy compound by dispersing rubber particles in an epoxy resin continuous phase wherein said rubber particles having a substrate of an elastomeric compound and grafted thereon an amount of from 0.05 to 0.5 parts by weight per 1 part by weight of elastomeric compound of a phase comprising a functionality which is capable of reacting along with a functionality of the continuous phase and a functionality which is capable of reacting along with functionalities of a curing agent characterized by using the diglycidyl ether of bisphenol A as the continuous epoxy resin phase and preparing the grafted phase from a monomer mixture containing styrene/acrylonitrile/glycidyl methacrylate or styrene/acrylonitrile/acrylic acid or ethyl acrylate/methacrylic acid.

The amount of particles is sufficient to provide a dispersed phase in the epoxy compound and sufficient to provide toughness to the epoxy compound when cured, and wherein said contact is in a manner sufficient to provide a dispersion of said grafted rubber concentrate in said epoxy compound such that functionalities of the epoxy compound can react with the reactive functional groups of the grafted rubber concentrate.

The compositions of this invention can be broadly described as rubber-modified epoxy compounds. The compositions of this invention are stable dispersions of polymer in the epoxy compound. As used herein the term "stable" is meant to refer to dispersions which remain substantially constant (i.e., do not undergo substantial reprecipitation or redispersion) under conditions of preparation as well as conditions of thermal cure. For example, the dispersion of grafted rubber concentrate remains stable (e.g., insoluble and noncoagulating) under normal preparation, handling and processing (e.g., curing) conditions by maintaining a substantially constant morphology (e.g., size and distribution) in the continuous phase at some temperature, normally above 60°C.

Compositions of this invention find a wide variety of uses in numerous applications where high performance engineering plastics are required. The compositions of this invention are useful in all applications in which epoxy resins are useful. The compositions of this invention can exhibit improved toughness and can maintain hardness at high application temperatures. For example, stable dispersions are used as coatings (e.g., solution, high solids or powder coatings); fiber-reinforced laminates; advanced

composites including aerospace, fiberglass reinforced plastics tooling, casting and molding resins; bonding agents; adhesives; encapsulants of electrical components which are exposed to wide temperature fluctuations; and the like.

Epoxy compound useful in this invention can be monomeric (e.g., the diglycidyl ether of bisphenol A). While the invention is applicable to polyepoxides, the polyepoxides are glycidyl polyethers of polyhydric phenols having weights per epoxide group of 150 to 2,000. These polyepoxides are usually made by reacting at least about two moles of an epihalohydrin or glycerol dihalohydrin with one mole of the polyhydric phenol, and a sufficient amount of a caustic alkali to combine with the halohydrin. The products are characterized by the presence of more than one epoxide group, i.e., a 1,2-epoxy equivalency greater than one.

The polyepoxide may also include a minor amount of a monoepoxide, such as butyl glycidyl ether, phenyl glycidyl ether, or cresyl glycidyl ether, as a reactive diluent. Such reactive diluents are commonly added to polyepoxide formulations to reduce the working viscosity thereof, and to give better wetting to the formulation. As is known in the art, a monoepoxide affects the stoichiometry of the polyepoxide formulation and adjustments are made in the amount of curing agent and other parameters to reflect that change.

The elastomeric particle compositions useful in this invention which are in the form of grafted rubber concentrates are those types of particles as are described in US—A—4,419,496. Other elastomeric particles are disclosed in US—A—3,830,878. Generally, particles are composed of aliphatic conjugated dienes such as 1,3-butadiene or acrylate homopolymers or interpolymers such as the esters of acrylic acid, and range in size from 0.03—2.0 µm (300 Å to 20,000 Å) in diameter. The amount of elastomeric material typically ranges from 15 to 90, preferably from 25 to 80, weight percent in the form of polymerized butadiene, isoprene and acrylate monomers such as 2-ethylhexyl acrylate and butylacrylate, and polysulfides, silicone rubbers, and the like; which is grafted with a polymer containing a functionally reactive group.

The elastomeric particles of this invention are those which have a functionally effective amount of crosslinking. By this is meant that the elastomeric or rubbery component is not completely soluble in a suitable solvent for the elastomeric or rubbery component. That is, the elastomeric or rubbery component of the grafted rubber concentrate forms a gel and swells in the solvents, but does not dissolve. Typically, in such a situation, the percent gel ranges from 50 to 95 percent, and the swelling index ranges from 3 to 50.

The elastomeric particles of this invention are those which have a functionally effective amount of crosslinking. By this is meant that the elastomeric or rubbery component is not completely soluble in a suitable solvent for the elastomeric or rubbery component. That is, the elastomeric or rubbery component of the grafted rubber concentrate forms a gel and swells in the solvents, but does not dissolve. Typically, in such a situation, the percent gel ranges from 50 to 95 percent, and the swelling index ranges from 3 to 50.

The elastomeric particles are those particles which comprise a graft polymer having a substrate of an elastomeric or rubbery component and having grafted thereto a vinyl polymer component. The vinyl polymer component can be described as a polymer containing a functional monomer. Typically, the amount of vinyl polymer attached phase which is grafted to the elastomeric or rubbery component is bonded to the surface region of the elastomeric or rubbery component and ranges from 10 to 90 weight percent of the total attached phase which is polymerized in the presence of the elastomeric or rubbery component. It is particularly desirable that the elastomeric or rubbery component comprise an adequate amount of attached phase grafted thereto, such that there be enough attached phase present to effectively stabilize the elastomeric particles in the epoxy phase. Typically, at least 0.05 to 0.1 parts by weight of attached phase per 1 part by weight of elastomeric or rubbery component will effectively stabilize the elastomeric particles in the epoxy phase. In some cases, as much as 0.5 parts by weight of attached phase per 1 part by weight of elastomeric or rubbery component can stabilize the elastomeric particles in the epoxy phase. The amount of graft which is employed in such effective amount which is that amount sufficient to stabilize the elastomeric particles in the epoxy phase will vary depending upon factors such as the particle size of the dispersed phase particles. For example, the use of smaller size will typically require the use of greater amounts of graft.

The graft molecular weight can vary and generally ranges from 10,000 to 250,000. Lower molecular weight grafts typically result in dispersions with low viscosity, while higher molecular weight grafts result in dispersions with high viscosity. When cross-linked, high molecular weight grafts provide improved toughness to the composition. The graft weight average molecular weight can be determined using techniques such as gel permeation chromotography on the nonattached phase in the grafted rubber concentrate.

The grafted or vinyl polymer attached phase polymers provide a compatibilizing interface which allows for dispersion of rubber particles in the epoxy compound. Preferred attached phase polymers are soluble in the epoxy compound. Typically grafted or attached phase polymers comprise copolymerized styrenics, acrylates and methacrylates, acrylonitrile monomers, acrylic acids, methacrylic acids, hydroxypropyl acrylate, hydroxyethyl acrylate, vinylized glycidyl ethers such as glycidyl methacrylate, and combinations thereof. The grafted or attached phase comprise a functionality which reacts along with functionalities of the epoxy compound. The grafted or attached phase comprise a functionality which is capable of reacting along with functionalities of the hardening agent or curing agent. The amount of monomer which contains such a functionality and which is polymerized in the attached polymer phase ranges from 1 to 20 weight percent based on the polymerized monomer having said functional group and the polymerized graft monomer in the outer region of the grafted rubber concentrate. The combinations of monomers which polymerize to form attached phase polymers include styrene/acrylonitrile/glycidyl methacrylate; styrene/acrylonitrile/acrylic acid; and ethyl acrylate/methacrylic acid.

The elastomeric particle composition can be incorporated into the epoxy compound continuous phase using a variety of techniques. For example, the grafted rubber concentrate in the form of a latex in an aqueous phase is contacted with the epoxy compound, and the aqueous phase is removed. If desired, the aqueous phase latex, epoxy compound, and suitable organic solvent can be contacted, and the aqueous phase and organic solvent can be removed. If desired, a dried grafted rubber concentrate can be contacted with the epoxy compound and an optional organic solvent; and the solvent (if employed) can be removed. The elastomeric particles are dispersed in the epoxy compound, preferably using a mixing or shearing device. After solvent and/or aqueous phase is removed the composition can be cured.

The dispersed phase can be in an amount which varies and which is typically of from 2 to 45 weight percent of the total dispersion (i.e., epoxy resin plus dispersed phase). The optimum concentration of dispersed phase can and will be varied depending upon the materials employed and the end use that is envisaged. The dispersions are usually made at a solids level at which the dispersions are to be used. However, it is possible to prepare higher dispersed phase volume dispersions and dilute to the final dispersed phase level.

The properties of the dispersion are influenced by a variety of factors including the identity of the components, the particle size and concentration of the disperse phase, the hardness or softness of the particles of the disperse phase, the concentration and nature of the graft phase, and many other factors. The dispersions typically exhibit moderately low viscosities, which provides a viscosity control which is desirable in epoxy compound applications.

For most practical applications, the stability of the dispersion and the property enhancement due to the dispersed phase will be optimized with particles that are less than some critical particle size which is 20 microns. Typically, the elastomeric particles range in size from 0.03—2.0 µm (300 Å to 20,000 Å), more desirably from 0.09—0.15 µm (900 Å to 1,500 Å), in diameter. If desired, mixtures of elastomeric particles of various sizes can be employed (e.g., a mixture of 0.8 µm (8,000 Å) particles and 0,1 µm (1,000 Å) particles) which particles are obtained, for example, by agglomeration of smaller size particles or selective growth of particles. In a situation wherein a mixture of particles of various sizes is employed, the bimodal mixture is particularly desired, and the small size particles preferably range from 0.09—0.15 µm (900 Å to 1,500 Å) in diameter, while the large size particles range from 0.4—1.0 µm (4,000 Å to 10,000 Å) in diameter.

The dispersions are solidified by curing the polyepoxide. In the curing of polyepoxides, the choice of curing agent can influence the cure rate, the exotherm and resultant properties of the finished product. Curing agents or hardening agents and their influence are known in the literature as, for example, in the book, *Handbook of Epoxy Resins*, (supra) and in *Chemical Reactions of Polymers*, Interscience Publishers, New York, pages 912—926, (1967) and in other reference works. Some of these influences are illustrated in *Modern Plastics Encyclopedia*, pages 33—34, (1982—1983). The hardening agent can be added to the composition after the dispersion of grafted rubber concentrate in epoxy compound is formed. Alternatively, the hardening agent can be contacted with the grafted rubber concentrate prior to the time that said grafted rubber concentrate is added to the continuous phase.

The cured products have improved toughness over those without the dispersed phase. Also, the heat distortion temperatures are improved over those exhibited by the products obtained by curing a polyepoxide containing dissolved carboxylated rubbers as, for example, carboxy-terminated diene elastomers.

The following examples are presented to further illustrate but not limit the scope of this invention. All parts and percentages are by weight unless otherwise indicated.

Example 1

Into a 3.8×10⁻³ m³ (1-gallon) glass reactor was charged 2689 g of a dispersion of a rubber latex. The latex dispersion contained 890 g rubber solids which solids represented 5 percent styrene, 93 percent butadiene and 2 percent acrylonitrile polymerized to yield a mixture of 56 percent diameter 0.8 µm (8000 Å) and 44 percent diameter 0.14 µm (1400 Å) solid particles. (The dispersion was stabilized with 0.92 percent sodium dodecylbenzene sulfonate soap). The reactor was flushed with nitrogen and heated while under agitation at 150 rpm. When the reactor temperature reached 80°C, an aqueous stream containing 4.3 percent sodium dodecyl benzene sulfonate and 0.43 percent sodium persulfate was added over 6 hours at the rate of 63.5 g per hour. Simultaneously with the aqueous stream was added a monomer stream containing 66 percent styrene, 25.4 percent acrylonitrile, 8.4 percent glycidyl methacrylate and 0.15 percent n-octyl mercaptan over the same 6 hour period at the rate of 137 g per hour. The reaction mixture was heated at a reactor temperature of 80°C for an additional 30 minutes. The mixture was then steam stripped in order to remove residual monomer. To the mixture was added 0.4 g of alkylated polyphenols which are sold commercially as Topanol® CA by Canadian Industries, and 1.4 g dilauryl thiodipropinate. The resulting dispersion contained 42.8 percent polymer solids, and the polymer contained 53.6 percent rubber in polymerized form. The polymer contained 36.4 percent grafted rigid phase and 10 percent nongrafted rigid phase. The grafted rubber resin so formed was isolated using freeze coagulation techniques and air dried

A dispersion of the grafted rubber concentrate with an epoxy resin was prepared as follows: 81.3 g of an epoxy resin which is a diglycidyl ether of bisphenol A [a liquid epoxy resin sold commercially by The Dow Chemical Company as D.E.R.® 383 epoxy resin, having an epoxy equivalent weight of from 178 to 186 and a viscosity at 25°C of between 9 and 11.5 Pa · s (9,000 and 11,500 centipoise)] is dissolved in 50 g of methyl ethyl ketone by mixing said components together at room temperature. To this solution was added 18.7 g of the dry grafted rubber concentrate which has been described hereinbefore. This mixture was sheared at room temperature for 5 minutes using a Tekmar® high shear device. The solvent and water are removed from the mixture by rotary evaporation under vacuum to yield a toughened epoxy dispersion having uniform dispersion and good stability. The viscosity of the toughened epoxy dispersion was low enough such that the sample was pourable at room temperature. The dispersion was cross-linked using a stoichiometric amount of methylene dianiline. The sample is designated as Sample No. 1.

For comparison purposes was provided an epoxy resin of the type described hereinbefore but which resin did not contain the grafted rubber concentrate. The epoxy resin is crosslinked using a stoichiometric amount of methylene dianiline. The sample is designated as Sample No. C-1.

Sample No. 2 was provided as follows: A grafted rubber concentrate was provided by polymerizing 319 g of the monomer mixture described hereinbefore in the presence of 108 g of rubber latex solids. The rubber latex solids had 80 percent 12,000 Å diameter and 20 percent 0.13 μm (1,300 Å) diameter solid particles. The grafted rubber concentrate had 13.1 percent attached rigid phase and 9.7 percent nonattached rigid phase; and the nonattached rigid phase had a molecular weight of 22,000. The dispersion of the grafted rubber concentrate in epoxy resin was provided by shearing 63.7 g of the grafted rubber latex dispersion (19.4 g of polymer solids) and 13.6 g of the previously described epoxy resin, and then removing water by rotary evaporation techniques. The dispersion of grafted rubber concentrate in epoxy resin was crosslinked using a stoichiometric amount of methylene dianiline.

Data concerning Sample Nos. 1, 2 and C-1 are presented in Table I.

TABLE I

| Sample | Percent rubber in sample | Tg (°C)[1] | Fracture energy[2] $(\times 10^{-2})$ j/cm$^2$ |
|--------|--------------------------|------------|---------------------------------------------|
| 1 | 10 | 147 | 25 |
| 2 | 10 | 163 | 5.8 |
| C-1* | 0 | 163 | 2.6 |

* Not an example of the invention.
[1] Glass Transition Temperature.
[2] Fracture energy is determined using a double-edged notched tensile bar which is (0.125 inch) 0.319 cm thick and drawn at (0.2 inch/minute) 0.5 cm/minute.

The data in Table I indicate that the samples of this invention exhibit excellent fracture energies with little, if any, lowering of the glass transition temperature.

Example 2

A grafted rubber concentrate was prepared by polymerizing 20 parts of a 92 percent ethyl acrylate, 8 percent methacrylic acid mixture in the presence of 80 parts of a latex containing butadiene type rubber particle. The rubber particles had a 0.1 μm (1,000 Å) diameter and were comprised of, in polymerized form, 92 parts butadiene, 5 parts styrene and 3 parts acrylonitrile. The polymerization was carried out in an agitated reactor outfitted for nitrogen blanketing whereby there was charged into the reactor 1,009 parts of the aforementioned rubber particles in the form of a 35 percent solids latex dispersion, 360 parts water, 1 part acetic acid in order to provide a reaction mass pH of 4, 0.085 part of the bisodium salt of ethylenediamine tetraacetic acid, and 1.05 part potassium persulfate. The reaction mass was heated to 65°C. At this point, 2 continuous additions were simultaneously fed into the reactor. The first feed contained 68 parts of an aqueous solution containing 0.125 percent potassium persulfate and 2.5 percent sodium dodecylbenzene sulfonate; and said feed was added over a 1.25 hour period. The second feed contained 85 parts of a mixture containing 92 percent ethyl acrylate and 8 percent methacrylic acid; and said feed was added over a 1 hour period. After addition of the continuous feeds were completed, the reaction mass was maintained at 65°C, with stirring for an additional 3 hours.

A dispersion of the ethyl acrylate/methacrylic acid grafted rubber concentrate in epoxy resin was provided as follows: To 80 parts of epoxy resin maintained at 50°C was added dropwise with agitation over a 15 minute period, 64.7 parts of a latex dispersion containing 20 parts of the previously described grafted rubber concentrate. Tme epoxy resin was a diglycidyl ether of bisphenol A. Water is removed from the uniform dispersion by evaporation in order to yield a viscous adhesive product. The sample was cured with triethylene tetraamine in order to provide a toughened resin exhibiting a glass transition temperature of 108°C.

Example 3

Into a thermostatically controlled 500 ml round-bottomed flask equipped with a stirrer, reflux condenser and feed ports was charged 131.6 g deionized water, 0.45 g of an azobisisobutyronitrile initiator, sold commercially as Vazo® 64 by E. I. duPont de Nemours and Co., and 346.8 of a partially coalesced latex. The latex was 34.6 percent solids in an aqueous medium, and the solids comprised 50 percent by volume particles having an average diameter of 0.1 μm and 50 percent by volume particles having an average diameter of 0.8 μm. The latex comprised in polymerized form 5 percent styrene, 92 percent butadiene and 3 percent acrylonitrile. The mixture which was charged into the flask was heated to 70°C under nitrogen atmosphere. A monomer stream containing 27 g styrene, 11.25 g acrylonitrile and 6.75 g glycidyl methacrylate was added to the heated mixture over a 1.5 hour period. After the monomer stream addition was complete, the resulting mixture was continued to be heated at 70°C for 2 hours in order to yield a latex dispersion of grafted rubber concentrate solids having 30.8 percent solids, and an average particle size of 1,390 Å as determined by light scattering.

The dispersion of latex particles in the epoxy resin continuous phase was provided as follows: Into a 1-liter container was charged 100 g of an epoxy resin which is a diglycidyl ether of bisphenol A having an epoxy equivalent weight of from 182 to 190 and a viscosity at 25°C of between 11,000 and 14,000 centipoise (11 and 14 Pa · s) and sold commercially as D.E.R.® 331 epoxy resin by The Dow Chemical Company. 100 g of this epoxy resin was mixed with 30 g methyl ethyl ketone and 97.4 g of the aqueous dispersion of grafted rubber concentrate particles. The aqueous phase was removed by azeotropic distillation by adding continuously 600 ml of methyl ethyl ketone to the refluxing pot at 80°C to 90°C and 101 kPa (1 atmosphere) pressure while removing water and methyl ethyl ketone. Final finishing was accomplished by vacuum drying the dispersion overnight at 50°C.

Example 4

Into a thermostatically controlled 500 ml round-bottomed flask equipped with a stirrer, reflux condenser and feed ports was charged 240 g deionized water, 0.9 g of the previously described Vazo® 64 initiator, and 337.2 g of a latex. The latex was 35.6 percent solids in an aqueous medium, and the solids particles had an average diameter of 0.114 μm (1,140 Å). The latex comprised, in polymerized form, 92 percent butadiene, 5 percent styrene and 3 percent acrylonitrile. The polymer phase was 91 percent gel and the swelling index of the particles was 19. The mixture which was charged into the flask is heated to 70°C under nitrogen atmosphere. 90 g of a monomer stream containing 60 g styrene, 25 g acrylonitrile and 15 g glycidyl methacrylate was added to the heated mixture over a 1.5 hour period. After the monomer stream addition was completed, the resulting mixture was continued to be heated at 70°C for 1.5 hours in order to yield a latex dispersion of grafted rubber concentrate solids having 31.3 percent solids, and an average particle size of 0.141 μm (1,410 Å) as determined by light scattering.

Into a 1-liter stirred flask was charged 100 g of the previously described D.E.R.® 331 epoxy resin, 100 g methyl ethyl ketone and 95.8 g of the aqueous dispersion of grafted rubber concentrate particles. The mixture was heated and the aqueous phase was removed by azeotropic distillation by continuously adding 600 ml of methyl ethyl ketone to the refluxing pot while removing water and methyl ethyl ketone at 80°C to 90°C at 101 kPa (1 atmosphere). Final finishing was accomplished by drying the dispersion overnight under vacuum at 50°C.

Example 5

In a round-bottomed flask equipped with an agitator, reflux condenser and nitrogen blanket was charged 626.3 g of a 38.3 percent solids latex dispersion (which latex contained in polymerized form 92 parts butadiene, 5 parts styrene and 3 parts acrylonitrile and which had a particle size of 1,250 Å), 240 parts deionized water, and 0.45 g of the previously described Vazo® 64 initiator. The reaction mass was heated to 70°C. To the reaction mass was added, over a 1.5 hour period, 45 g of a 60 parts styrene, 25 parts acrylonitrile and 15 parts glycidyl methacrylate monomer mixture. After addition of the monomer mixture was complete, the reaction mixture was heated at 70°C for an additional 3 hours. The solids level of the latex dispersion product was 30.2 percent.

To 1,000 g of methyl ethyl ketone was added 250 g of the previously described latex dispersion. The mixture was allowed to phase separate overnight. To 1,185 g of the upper phase (i.e., methyl ethyl ketone phase) which was separated from the aqueous phase was added a mixture containing 275 g of the previously described D.E.R.® 331 epoxy resin and 275 g of methyl ethyl ketone. The mixture was subjected to vacuum distillation at 60°C to 80°C.

The product which contained 25 percent grafted rubber concentrate and 75 percent epoxy resin was gel-free and pourable, having a viscosity of 24 Pa · s (24,000 cps).

A coating provided by mixing 5.4 g of the previously described product and 2 g of polyamide resin which is commercially available as Versamid® 140 from Henkel Corporation. After mixing, coating of the mixture and casting at 0.127 mm (5 mils) onto cold rolled steel, the mixture was cured for 3 hours at 110°C.

The reverse Gardner Impact of the sample was 92.2 cm.kg (80 inch.pounds). For comparison purposes, a 4 g sample of the epoxy resin and 2 g of the previously described polyamide resin are mixed and similarly treated. The reverse Gardner Impact of the sample is 30.43 cm.kg (20 inch pounds).

**Claims**

1. An epoxy resin composition suitable for preparing toughened cured epoxy resins comprising
(1) an epoxy resin continuous phase and
(2) a discontinuous phase of rubber particles dispersed in said continuous phase wherein the rubber particles having a substrate of an elastomeric component and grafted thereon an amount of from 0.05 to 0.5 parts by weight per 1 part by weight of the elastomeric component of a phase comprising a functionality which is capable of reacting along with a functionality of the continuous phase and a functionality which is capable of reacting along with functionalities of a curing agent
characterized in that the continuous epoxy resin phase is the diglycidyl ether of bisphenol A and the grafted phase is a polymer prepared from a monomer mixture containing styrene/acrylonitrile/glycidyl methacrylate or styrene/acrylonitrile/acrylic acid or ethyl acrylate/methacrylic acid.

2. A process for preparing a toughened epoxy compound by dispersing rubber particles in an epoxy resin continuous phase wherein said rubber particles having a substrate of an elastomeric compound and grafted thereon an amount of from 0.05 to 0.5 parts by weight per 1 part by weight of elastomeric compound of a phase comprising a functionality which is capable of reacting along with a functionality of the continuous phase and a functionality which is capable of reacting along with functionalities of a curing agent characterized by using the diglycidyl ether of bisphenol A as the continuous epoxy resin phase and preparing the grafted phase from a monomer mixture containing styrene/acrylonitrile/glycidyl methacrylate or styrene/acrylonitrile/acrylic acid or ethyl acrylate/methacrylic acid.

3. The composition of Claim 1 wherein said elastomeric particle ranges in size from 0.03 to 2.0 μm (300 Å to 20,000 Å) in diameter.

4. The composition of Claim 1 wherein said discontinuous phase dispersed in said continuous phase ranges from 2 to 45 weight percent, based on the total weight of the composition.

5. The composition of claim 1 where said styrene polymer of the grafted phase has a molecular weight which ranges from 10,000 to 250,000.

6. The composition of claim 1 wherein the amount of monomer which comprises a functionality which can react with functionalities of the epoxy compound ranges from 1 to 20 weight percent based on the weight of the polymerized monomer containing said functionality and the polymerized graft monomer in the outer region of the grafted rubber concentrate.

7. The composition of claim 1 wherein said elastomeric particle comprises polymerized acrylic acid ester.

8. The composition of claim 1 wherein said continuous phase contains a hardening agent.

9. The composition of claim 8 which is cured.

10. The process of claim 2 wherein said elastomeric particle composition in the form of a grafted rubber concentrate which is contacted with a hardening agent prior to contacting said elastomeric particle composition with said continuous phase.

**Patentansprüche**

1. Epoxyharzzusammensetzung, die zum Herstellen eines schlagfesten, gehärteten Epoxyharzes verwendet werden kann, enthaltend
(1) eine kontinuierliche Phase Epoxyharz und
(2) eine in der kontinuierlichen Phase dispergierte diskontinuierliche Phase von Kautschukteilchen, wobei die Kautschukteilchen ein Substrat aus einem elastomeren Bestandteil und darauf gepfropft eine Menge von 0,05 bis 0,5 Gewichtsteilen pro Gewichtsteil elastomerem Bestandteil einer Phase aufweisen, die eine Funktionalität, die mit einer Funktionalität der kontinuierlichen Phase reagieren kann, und eine Funktionalität, die mit Funktionalitäten eines Härtungsmittel reagieren kann, aufweist,
dadurch gekennzeichnet, daß die kontinuierliche Epoxyharzphase der Diglycidylether von Bisphenol A und die gepfropfte Phase ein Polymer ist, das aus einer Styrol/Acrylnitril/Glycidylmethacrylat oder Styrol/Acrylnitril/Acrylsäure oder Ethylacrylat/Methacrylsäure enthaltenden Monomermischung hergestellt ist.

2. Verfahren zum Herstellen einer schlagfesten Epoxyverbindung durch Dispergieren von Kautschukteilchen in einer kontinuierliche Epoxyharzphase, wobei die Kautschukteilchen ein Substrat aus einem elastomeren Bestandteil und darauf gepfropft eine Menge von 0,05 bis 0,5 Gewichtsteilen pro Gewichtsteil elastomerem Bestandteil einer Phase aufweisen, die eine Funktionalität, die mit einer Funktionalität der kontinuierlichen Phase reagieren kann, und eine Funktionalität, die mit Funktionalitäten eines Härtungsmittel reagieren kann, aufweist, gekennzeichnet durch Verwenden des Diglycidylethers von Bisphenol A als kontinuierliche Epoxyharzphase und Herstellen der gepfropften Phase aus einer Monomermischung, enthaltend Styrol/Acrylnitril/Glycidylmethacrylat oder Styrol/Acrylnitril/Acrylsäure oder Ethylacrylat/Methacrylsäure.

3. Zusammensetzung nach Anspruch 1, dadurch gekennzeichnet, daß die elastomeren Teilchen einen Durchmesser von 0,03 bis 2,0 µm (300 Å bis 20.000 Å) aufweisen.

4. Zusammensetzung nach Anspruch 1, dadurch gekennzeichnet, daß in der kontinuierlichen Phase von 2 bis 45 Gew.-%, bezogen auf Gesamtgewicht der Zusammensetzung, diskontinuierliche Phasen dispergiert sind.

5. Zusammensetzung nach Anspruch 1, dadurch gekennzeichnet, daß das Styrolpolymer der gepfropften Phase ein Molekulargewicht im Bereich von 10.000 bis 250.000 aufweist.

6. Zusammensetzung nach Anspruch 1, dadurch gekennzeichnet, daß die Monomermenge, die eine Funktionalität enthält, die mit Funktionalitäten der Epoxyverbindung reagieren kann, von 1 bis 20 Gew.-%, bezogen auf das Gewicht des polymerisierten, diese Funktionalität aufweisenden Monomer und des polymerisierten, gepfropften Monomere in dem Außenbereich des gepfropften Kautschukkonzentrates, beträgt.

7. Zusammensetzung nach Anspruch 1, dadurch gekennzeichnet, daß das elastomere Teilchen polymerisierten Acrylsäureester enthält.

8. Zusammensetzung nach Anspruch 1, dadurch gekennzeichnet, daß die kontinuierliche Phase ein Härtungsmittel enthält.

9. Zusammensetzung nach Anspruch 8, dadurch gekennzeichnet, daß sie gehärtet ist.

10. Verfahren nach Anspruch 2, dadurch gekennzeichnet, daß die elastomere Teilchenzusammensetzung in Form eines gepfropften Kautschukkonzentrates mit einem Härtungsmittel in Berührung gebracht wird, ehe die Zusammensetzung elastomerer Teilchen mit der kontinuierlichen Phase in Berührung gebracht wird.

**Revendications**

1. Composition de résine époxy appropriée à la préparation de résines époxy durcies à ténacité accrue, comprenant
(1) une phase continue de résine époxy et
(2) une phase discontinue de particules de caoutchouc dispersées dans ladite phase continue, les particules de caoutchouc comportant un support constitué d'un composant élastomère, et, greffée sur celui-ci, une quantité de 0,05 à 0,5 partie en poids, pour 1 partie en poids du composant élastomère, d'une phase comprenant une fonctionnalité qui est capable de réagir avec une fonctionnalité de la phase continue, et une fonctionnalité qui est capable de réagir avec des fonctionnalités d'un durcisseur, caractérisé en ce que la phase continue de résine époxy est l'éther diglycidylique de bisphénol A, et la phase greffée est un polymère préparé à partir d'un mélange de monomères contenant styrène/acrylonitrile/méthacrylate de glycidyle ou styrène/acrylonitrile/acide acrylique ou acrylate d'éthyle/acide méthacrylique.

2. Procédé pour la préparation d'une composition époxy à ténacité accrue, par dispersion de particules de caoutchouc dans une phase continue de résine époxy, lesdites particules de caoutchouc comportant un support constitué d'un composé élastomère, et, greffée sur celui-ci, une quantité de 0,05 à 0,5 partie en poids, pour 1 partie en poids de composé élastomère, d'une phase comprenant une fonctionnalité qui est capable de réagir avec une fonctionnalité de la phase continue, et une fonctionnalité qui est capable de réagir avec des fonctionnalités d'un durcisseur, caractérisé par l'utilisation de l'éther diglycidylique de bisphénol A en tant que phase de résine époxy continue, et la préparation de la phase greffée à partir d'un mélange de monomères contenant styrène/acrylonitrile/méthacrylate de glycidyle ou styrène/acrylonitrile/acide acrylique ou acrylate d'éthyle/acide méthacrylique.

3. Composition selon la revendication 1, dans laquelle lesdites particules élastomères ont une taille allant de 0,03 à 2,0 µm (300 Å à 20 000 Å) de diamètre.

4. Composition selon la revendication 1, dans laquelle ladite phase discontinue dispersée dans ladite phase continue représente de 2 à 45% en poids, par rapport au poids total de la composition.

5. Composition selon la revendication 1, dans laquelle ledit polymère de styrène de la phase greffée a une masse moléculaire allant de 10 000 à 250 000.

6. Composition selon la revendication 1, dans laquelle la quantité de monomère qui comprend une fonctionnalité pouvant réagir avec des fonctionnalités du composé époxy, va de 1 à 20% en poids, par rapport au poids du monomère polymérisé contenant ladite fonctionnalité et du monomère greffé polymérisé dans la région externe du concentré de caoutchouc greffé.

7. Composition selon la revendication 1, dans laquelle lesdites particules élastomères comprennent un ester d'acide acrylique polymérisé.

8. Composition selon la revendication 1, dans laquelle ladite phase continue contient un durcisseur.

9. Composition selon la revendication 8, qui est durcie.

10. Procédé selon la revendication 2, dans lequel ladite composition de particules élastomères sous la forme d'un concentré de caoutchouc greffé est mise en contact avec un durcisseur, avant la mise en contact de ladite composition de particules élastomères avec ladite phase continue.